# EUROPEAN PATENT SPECIFICATION

(11) **EP 0 584 953 B1**
(45) Date of publication and mention of the grant of the patent: **11.03.1998**
(21) Application number: 93305865.3
(22) Date of filing: 26.07.1993
(51) Int. Cl.: C08L 67/02

(54) **Polyester resin composition for blow or extrusion molding and hollow molded article thereof**
Polyesterharzzusammensetzung zum Blasformen oder Strangpressen und hieraus hergestellte Hohlformkörper
Composition de résine de polyester pour moulage par soufflage ou moulage par extrusion et article creux moulé en forme

(30) Priority: 28.07.1992 JP 201371/92
(43) Date of publication of application: 02.03.1994
(73) Proprietor: POLYPLASTICS CO. LTD., Chuo-Ku Osaka-shi Osaka 541 (JP)
(72) Inventor: Shiwaku, Toshio, Fuji-shi, Shizuoka (JP); Fujita, Yasushi, Fuji-shi, Shizuoka (JP); Nakane, Toshio, Fuji-shi, Shizuoka (JP); Hijikata, Kenji, Mishima-shi, Shizuoka (JP)
(74) Representative: Jackson, Peter

(56) References cited:
- EP-A- 0 480 770
- DATABASE WPI Week 8609, Derwent Publications Ltd., London, GB; AN 86-059735

## Description

The present invention relates to a polyester resin composition suitable for blow or extrusion molding and a hollow molded article produced from this composition by such molding.

Although thermoplastic polyester resins having well-balanced properties, including excellent mechanical strength, thermal resistance, chemical resistance and electrical properties, are widely used as typical engineering plastics, most of them are produced solely by injection. However, the uses of polyester resins tend to be highly advanced or specialized, and there is a need to produce hollow molded articles from these resins by efficient and economic molding techniques such as blow molding.

Hollow components, for example pipes and tanks, employed in the engine compartment of motor vehicles must withstand high temperatures and severe mechanical stresses and have heretofore mostly been made of metal or heavy-duty rubber. There is however a demand to produce such components by blow molding of a thermoplastic polyester resin so as to benefit from its excellent properties and thereby to reduce the component weight, reduce rust problems and reduce processing costs.

It is difficult to produce blow-molded polyester resin articles of a desired shape. Blow molding requires high melt tension but polyester resin undergoes serious drawdown due to a low melt tension. To overcome these defects, consideration has been given to a process using a polyester resin having a high degree of polymerization and a high intrinsic viscosity, a process using a branched polyester, and a process using an added filler. The improvements achieved by these processes are however only slight and their products do not adequately meet the requirements for the molding processes.

Other prior proposals to improve the melt tension and to prevent the drawdown have included a process which comprises incorporating a branching agent such as an isocyanate or epoxy compound into the polyester resin and a process which comprises incorporating a copolymer of ethylene with an α,β-unsaturated glycidyl ester into the polyester resin. These processes have, however, defects that the effect thereof is insufficient and the moldability is unstable to make the production of uniform, excellent molded articles difficult.

After investigations made for the purpose of producing a resin composition for blow molding which has melt tension and drawdown resistance sufficient for repeated recycling of blow-molded articles, the present inventors have found that when an acrylonitrile polymer (component (B) of the present invention) is used as the improver, this problem can be solved, whereby a stable blow moldability can be obtained even from the recycled material and the amount of the resin to be disposed of is reduced to attain a remarkable economic effect. The present invention has been completed on the basis of this finding.

Thus, the present invention provides a polyester resin composition for blow or extrusion molding prepared by blending:
(A) 100 parts by weight of a thermoplastic polyester resin prepared from mainly an aromatic dicarboxylic acid or an ester-forming derivative thereof and mainly an aliphatic dihydroxy compound having 2 to 8 carbon atoms,
(B) 0.5 to 10 parts by weight of an acrylonitrile copolymer comprising from (B-1) 51 to 97% by weight of acrylonitrile units, (B-2) 49 to 3% by weight of epoxidized α,β-unsaturated monomer units,
(C) 0 to 10 parts by weight of a styrene copolymer comprising (C-1) 40 to 97% by weight of styrene unit, (C-2) 60 to 3% by weight of an epoxidized α,β-unsaturated monomer unit and 0 to 50% by weight of a vinylic monomer unit other than the components (C-1) and (C-2), and
(D) 0 to 100 parts by weight of at least one of fibrous, powdery or flaky fillers.

The thermoplastic polyester resin (A) to be used in the present invention is a polyester produced by polycondensing mainly an aromatic dicarboxylic acid compound and mainly an aliphatic dihydroxy compound having 2 to 8 carbon atoms, and the effect of the present invention can be achieved irrespective of whether it is a homopolyester or a copolyester.

Examples of the aromatic dicarboxylic acid compound constituting the polyester (A) include known aromatic dicarboxylic acids such as terephthalic, isophthalic, naphthalenedicarboxylic and diphenyldicarboxylic acids and ester-forming derivatives thereof. They can be used either singly or in combination of two or more of them. Among these compounds, those mainly comprising terephthalic acid or an ester-forming derivative thereof are preferred.

Examples of the aliphatic dihydroxy compound having 2 to 8 carbon atoms which is the other main component constituting the polyester (A) of the present invention include ethylene glycol, propylene glycol, butanediol, neopentyl glycol, hexanediol, cyclohexanediol, cyclohexanedimethanol, diethylene glycol and triethylene glycol and substituted derivatives thereof. They can be used either singly or in the form of a mixture of two or more of them. Among these compounds, those mainly comprising an aliphatic dihydroxy compound having 2 to 4 carbon atoms are preferred.

Other comonomer components constituting the copolyester (A) than those described above include dicarboxylic acids such as diphenyl ether dicarboxylic acid, α,β-bis(4-carboxyphenoxy)ethane, adipic acid, sebacic acid, azelaic acid, decanedicarboxylic acid, dodecanedicarboxylic acid, cyclohexanedicarboxylic acid and dimer acids and ester-forming derivatives thereof; glycols such as pentanediol, neopentyl glycol, hexanediol, octanediol, decanediol, cyclohexanedimethanol, hydroquinone, bisphenol A, 2,2-bis(4'-hydroxyethoxyphenyl)propane, xylene glycol, polyethylene glycol, polytetramethylene glycol and aliphatic polyester oligomers having hydroxyl groups at both ends; hydroxy carboxylic acids such as glycolic acid, hydroxy acid, hydroxybenzoic acid, hydroxyphenylacetic acid and naphthylglycolic acid; and lactone compounds such as propiolactone, butyrolactone, caprolactone, valerolactone and caprolactone.

Further the polyester (A) may be one having a branched or crosslinked structure formed by using a polyfunctional ester-forming component such as trimethylolpropane, trimethylolethane, pentaerythritol, trimellitic acid, trimesic acid or pyromellitic acid so far as the thermoplasticity can be kept. Also the polyester may be one comprising an ester-forming component having an ionic group, such as sulfoisophthalic acid or sodium p-hydroxyethylphenylsulfonate.

The polyesters (A) include also halogenated polyester copolymers produced from an ester-forming aromatic compound having a halogenated substitutent on the aromatic ring, such as dibromoterephthalic acid, tetrabromoterephthalic acid, tetrachloroterephthalic acid, 1,4-dimethyloltetrabromobenzene, tetrabromobisphenol A, and ethylene oxide or propylene oxide adduct of tetrabromobisphenol A.

These polyesters may be used also in the form of a mixture of two or more of them.

Particularly preferred polyester resins as the component (A) in the present invention include polybutylene terephthalate and copolymers mainly comprising it. Particularly preferred comonomer components constituting the copolymer include, for example, isophthalic acid, ethylene glycol, bisphenol A, cyclohexanedimethanol, 2,2-bis(β-hydroxyethoxyphenyl)propane, 2,2-bis(β-hydroxyethoxytetrabromophenyl)propane and polytetramethylene glycol. Polybutylene terephthalate copolymers having a suitably branched or crosslinked structure produced by polycondensation with a small amount of the above-described comonomer having at least three esterifiable functional groups also belong to the preferred polyesters. Polyethylene terephthalate polymers and copolymers are also suitable. Further a mixture of the above-described polybutylene terephthalate polymer and the polyethylene terephthalate polymer in an arbitrary blending ratio is also preferably used.

The viscosity of the polyester (A) used in the present invention is not particularly limited so far as it can be injection-molded. Usually a polyester (A) having an intrinsic viscosity of 0.6 to 2.0 is suitable. Even if it has a particularly low viscosity, the blow molding becomes possible and the moldability is remarkably improved when it is blended with component (B). However, a polyester (A) which per se has an excessively high viscosity is not preferred, since it reduces the flowability.

The component (B) to be used for improving the blow moldability is a characteristic component of the present invention, since when it is incorporated into a polyester base, it improves the melt tension and controls the drawdown and particularly even when the blow-molded articles are recycled, it exhibits an effect of remarkably improving the blow moldability. The component (B) is a copolymer comprising 51 to 97% by weight of acrylonitrile units (B-1) and 49 to 3% by weight of epoxidized α,β-unsaturated monomer units (B-2) as the indispensable structural units.

The preferred copolymer (B) comprises 58 to 85% by weight of the units (B-1) and 42 to 15% by weight of the units (B-2). If the amount of the units (B-2) is in excess, the composition tends to gel, the blow moldability is impaired and the surface state of the resultant molded article is also impaired unfavorably and, on the contrary, if it is insufficient, the effect of improving the blow moldability such as melt tension and inhibition of the drawdown cannot be obtained.

Among the epoxidized α,β-unsaturated monomers (B-2), particularly preferred are glycidyl esters of α,β-unsaturated acids represented by the following general formula (1): 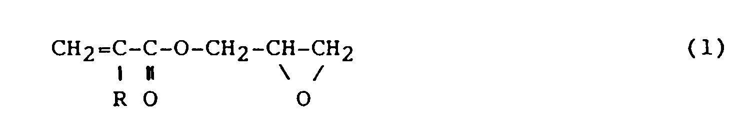 wherein R represents a hydrogen atom, a lower alkyl group or a glycidyl ester group.

Examples of the said glycidyl esters include glycidyl acrylate, glycidyl methacrylate, glycidyl ethacrylate and glycidyl itaconate, among which glycidyl methacrylate is particularly preferred.

The copolymer (B) to be used in the present invention may be a multicomponent copolymer produced by copolymerizing the above-described two components (B-1) and (B-2) and, as third component, one or more vinyl monomers and thereby to include in the copolymer (B) up to 46% by weight (based on the weight of the copolymer) of vinylic monomer units other than the components (B-1) and (B-2). Preferred examples of the third components include styrene and styrene derivatives. Although the copolymer (B) may be a multicomponent copolymer comprising a small amount of another vinyl monomer as an assistant component in addition to the above-described components, it is not preferred that the copolymer (B) comprises an α-olefinic monomer such as ethylene, propylene or butene-l which rather impairs the effect.

The component (B) to be used in the present invention is characterized by being a copolymer comprising at least above a half (51%) by weight of acrylonitrile units (B-1). Such a constitution is capable of inhibiting impairment of the effect of the recycling. For example, when the amount of the acrylonitrile units (B-1) is insufficient or when the styrene unit is used, the melt tension and drawdown resistance are gradually lowered unfavorably as the recycling is repeated, though the melt tension and drawdown resistance are sufficient in the first cycle.

The amount of the acrylonitrile copolymer (B) is 0.5 to 10 parts by weight, particularly preferably 1 to 8 parts by weight, for 100 parts by weight of the component (A). If the amount of the copolymer (B) is insufficient, none of the effects of improving the blow moldability in the first cycle and that in the recycling as intended in the present invention can be obtained and, on the contrary, if it is in excess, the resin composition gels unfavorably.

It is often desirable to use in combination with the above-described component (B) up to 10 parts by weight of a styrene copolymer (C) comprising (C-1) 40 to 97% by weight of styrene unit, (C-2) 60 to 3% by weight of an epoxidized α,β-unsaturated monomer unit. The epoxidized α,β-unsaturated monomer unit (C-2) is the same as the unit (B-2) of the component (B).

The styrene copolymer (C) may be a multicomponent copolymer produced by copolymerizing the above-described two components (C-1) and (C-2) and, in addition, up to 50 % by weight of one or more vinylic monomers other than the components (C-1) and (C-2). Preferred examples of the third component include acrylonitrile, vinyl chloride, α-methylstyrene, brominated styrene and phenylmaleimide. Acrylonitrile is most desirable as the third component. The terpolymer containing 50% by weight or below, preferably 40% by weight or below, of acrylonitrile exhibits a more excellent effect of improving the blow moldability. Although the copolymer (C) may be a multicomponent copolymer comprising a small amount of another vinylic monomer as an assistant component in addition to the above-described components, it is not preferred that the copolymer (C) comprises an olefinic monomer such as ethylene, propylene or butene-1 which rather impairs the effect as in the above-described case of the component (B).

A difference between the component (B) and the component (C) is that the former comprises the acrylonitrile unit (B-1) as the main component (at least 51% by weight), while the latter mainly comprises styrene (C-1), and even when the latter contains acrylonitrile, the amount thereof is limited to at most 50% by weight. The components (B) and (C) are subtly different from each other in their effects (particularly in recycling) as described above. For the recycling of the material, the presence of at least the component (B) is important and it is desirable to use the combination of them.

Therefore, the amount of the component (C) is 0 to 10 parts by weight, preferably 0.5 to 5 parts by weight, for 100 parts by weight of the component (A). When the amount of the component (C) is in excess, the whole composition gels unfavorably.

The epoxidized copolymers (B) and (C) in the present invention can be easily produced from the monomers constituting them by ordinary radical polymerization method conducted in the presence of a radical polymerization catalyst.

The copolymers to be used as the components (B) and (C) of the present invention may be graft copolymers comprising the above-described linear copolymer chemically bonded to a small amount of a vinylic polymer to form a branched or crosslinked structure. Examples of the vinylic monomer constituting a branched or crosslinked segment include acrylic acid, alkyl acrylates, methacrylic acid, alkyl methacrylates, styrene and acrylonitrile. The copolymer having such a branched or crosslinked structure can be converted into a graft copolymer by, for example, copolymerizing at least one of the above-described vinylic monomers with a radical-polymerizable organic peroxide in the presence of the above-described linear copolymer to form a peroxide-containing copolymer and heat-kneading the resultant copolymer. However, the components (B) and (C) per se used in the present invention must be each a substance flowable at the melt kneading temperature. It is desirable that the melt viscosities of the components (B) and (C) are lower than that of the polyester resin (A) at the melt-kneading temperature. If the component (B) or (C) has a high molecular weight and a high melt viscosity or is highly grafted, the flowability and dispersibility thereof in the polyester are reduced and, therefore, the effect of improving the blow moldability is reduced and the surface state of the molded article is impaired unfavorably.

At least one of fibrous, powdery, granular and flaky fillers can be further incorporated as a component (D) into the resin composition of the present invention in an amount up to 100 parts by weight. The blend including the filler (D) is melt-kneaded and blown or extruded as required. The filler is effective in improving the mechanical properties, particularly strength and rigidity, of the molded articles.

The fibrous fillers include inorganic fibrous substances such as fibers of glass, asbestos, carbon, silica, silica/alumina, zirconia, boron nitride, silicon nitride, boron and potassium titanate, and fibers of metals such as stainless steel, aluminium, titanium, copper and brass. Particularly typical fibrous fillers are glass fibers.

The powdery or granular fillers include carbon black; silicates such as silica, quartz powder, glass bead, glass powder, calcium silicate, aluminium silicate, kaolin, talc, clay, diatomaceous earth and wollastonite; metal oxides such as iron oxide, titanium oxide, zinc oxide and alumina; metal carbonates such as calcium carbonate and magnesium carbonate; metal sulfates such as calcium sulfate and barium sulfate; as well as silicon carbide, silicon nitride, boron nitride and various metal powders.

The flaky fillers include mica, glass flakes and various metal foils.

These inorganic fillers may be used either singly or in the form of a combination of two or more of them. The combination of the fibrous filler, particularly glass fiber with the powdery, granular or flaky filler is suitable for obtaining molded articles having excellent mechanical strengths, dimensional accuracy and electrical properties. Such a combination is effective particularly in improving the blow moldability.

In using the filler, it is desirable to use a binder or surface treatment. Examples of the binder and surface treatment include functional compounds such as epoxy, isocyanate, titanate and silane compounds.

The amount of the above-described filler to be used as the component (D) in the present invention is at most 100 parts by weight, preferably 10 to 70 parts by weight, for 100 parts by weight of the polyester (A). If the amount of the filler is insufficient, the rigidity and strength tend to be lowered and, on the contrary, when it exceeds 100 parts by weight, the moldability is impaired unfavorably.

The polyester resin composition of the present invention may contain a small amount of another thermoplastic resin in addition to the above-described components.

Such a thermoplastic resin usable herein is any of thermoplastic resins resistant to high temperature. Examples of such resins include polyamide polymers, styrene (co)polymers other than those described above, polycarbonates, polyphenylene oxides, polyalkyl acrylates, polyacetals, polysulfones, polyether sulfones, polyether imides, polyether ketones and fluororesins. They may be used alone or as a mixture of two or more of them.

Among these thermoplastic resins, preferred are polyamide resins such as nylon 6, nylon 66, nylon 12 and copolymers thereof. They are used in an amount of preferably at most 100 parts by weight, still preferably at most 60 parts by weight, for 100 parts by weight of the component (A). Although the polyamide resins are effective in increasing the melt tension, stabilizing the parison and improving the drawdown resistance, they impair the characteristics of the resin used as the component (A) unfavorably when they are used in excess.

Known substances usually added to synthetic resins, such as stabilizers, e.g. antioxidants and ultraviolet absorbers, antistatic agents, flame retardants, colorants, e.g. dyes and pigments, lubricants, releasing agents, crystallization accelerators and nucleating agents, can be suitably added to the polyester resin composition of the present invention depending on the required properties.

In the process of the present invention, the above-described polyester resin (A) is blended with the epoxidized acrylonitrile copolymer (B) and, if necessary, further with the component (C) and/or component (D) and other desired components, in a molten state, and the resulting mixture is then blown. The components thus kneaded in a molten state can be pelletized on a single-screw or double-screw extruder prior to the blow molding or, alternatively, the mixture kneaded in a molten state can be directly shaped into a parison for blow molding and then molded.

The components (A), (B) and (C) may be kneaded together at once in a molten state or they may be kneaded separately from each other and then mixed together or the components can be added in portions and kneaded in a molten state.

The blow molding in the present invention can be conducted by an ordinary method on a blow molding machine usually used for blow molding of thermoplastic resins. Namely, this method comprises plasticizing the above-described polyester resin composition on an extruder or the like, shaping the plasticized resin composition into an annular molten or softened intermediate parison by extrusion or injection through an annular die, placing the parison in a mold, blowing a gas into the parison to inflate it, and solidifying the inflated parison by cooling into a hollow molded article. As for the molding conditions for the polyester resin composition of the present invention, the cylinder and die temperatures are preferably 200 to 290°C. When polybutylene terephthalate is used as the component (A), the temperature of each of them is particularly preferably 230 to 260°C. The mold temperature is preferably 40 to 130°C, particularly preferably 80 to 100°C. The gas to be blown into the parison may be air, nitrogen, etc. From the economic viewpoint, air is usually used under a blow pressure of preferably 0.3 to 1 MPa (3 to 10 kg/cm²). A special blow molding machine such as a three-dimensional blow molding machine may also be used for the molding. In addition, a multi-layer blown article comprising one or more layers made of the composition of the present invention in combination with layers made of other materials can be produced.

As compared with an ordinary polyester resin or a composition thereof, the polyester resin composition of the present invention is enhanced in melt tension and remarkably improved in blow moldability without causing drawdown of a parison during the blow molding, and capable of producing a hollow blown article having a uniform thickness and an excellent appearance. Even when the material is repeatedly recycled, the economics of the blow molding are not adversely affected.

Further the present invention is capable of providing hollow molded articles having excellent mechanical properties and thermal resistance and usable under considerably severe conditions, such as an intake manifold of an automobile, suction and exhaust parts around the engine, vessels for high-temperature liquids, chemicals and solvents, vessels such as pipes and floats, and tubes (including those of irregular shapes).

### Examples

The following non-limiting Examples further illustrate the present invention.

### Examples 1 to 7 and Comparative Examples 1 to 3 (Table 1)

As shown in Table 1, a polybutylene terephthalate resin (PBT) having an intrinsic viscosity of 1.0 as the component (A) was blended with an acrylonitrile/glycidyl methacrylate copolymer having an intrinsic viscosity of 0.1 as the component (B) and, if necessary, a styrene/glycidyl methacrylate copolymer having an intrinsic viscosity of 0.1 as the component (C), and the resultant mixture was kneaded in a molten state on a double-screw extruder to form pellets of the resin composition.

Then cylindrical hollow vessels having an average thickness of 2.5 mm and a capacity of 0.5 l (500 cc) were produced by molding the pellets on a blow molding machine (S-45ND manufactured by Placo Co., Ltd.) under the conditions comprising a die (diameter of 50 mm, distance of 3 mm) temperature of 250°C, a mold temperature of 80°C and a blow pressure of 0.49 MPa (5 kg/cm²) unless otherwise stated, to evaluate the moldability, i.e., drawdown, breakage during the blowing, uniformity of the thickness of the molded article and its appearance (surface roughness and unevenness). Further the cylindrical hollow vessels thus obtained by blow molding were pulverized and the whole powder thus obtained was used again for producing cylindrical hollow vessels to evaluate the moldability of the powder.

For comparison, the same test as that described above was repeated except that either only resin component (A) was used or a combination of component (A) with only component (C) was used. The results are given in Table 1.

The methods for the determination of the characteristic values were as described below.

### 1) Melt tension:

The load necessitated when a resin extruded through an orifice having a diameter of 1 mm at 255°C was taken up with a capillary rheometer at a drawdown ratio of 10 was determined with a load cell. When the glass fiber-containing resin was used, the same method as that described above was employed except that the drawdown ratio was altered to 2.

### 2) Blow moldability:

### Drawdown:

The ratio of the time taken for the length of the parison extruded from the blow molding machine to reach 120 mm to that to reach 600 mm was evaluated as the drawdown index. The drawdown index of a resin completely free from the drawdown was 5 and that of a resin undergoing instantaneous drawdown was 1.

### Breakage during blowing:

The breakage of the molded article during blow molding was macroscopically observed.

### Uniformity of thickness of molded article:

The molded article was cut and the thickness of each of three portions, i.e. upper, middle and lower parts, of the cylinder was measured with a micrometer to determine the thickness variation [differences (%) between the maximum thickness and the average thickness and between the minimum thickness and the average thickness].

### Appearance:

The surface smoothness (roughness) was macroscopically observed and the results were classified into three ranks of "excellent", "good" and "bad".
Note re Table 1:
*1:
   A: acrylonitrile,
   S: styrene,
   G: glycidyl methacrylate.

### Examples 8 to 11 and Comparative Examples 4 to 7 (Table 2)

The same procedure as that of the above-described Examples was repeated except that the composition of the component (A) was varied to obtain test results given in Table 2.
Note re Table 2:)
*1:
   A: acrylonitrile,
   S: styrene,
   G: glycidyl methacrylate
*2:
   PA6: nylon 6,
   PET: polyethylene terephthalate,
*3: determined at 270°C.

### Examples 12 to 14 and Comparative Examples 8 to 10 (Table 3)

The same test as that described above was repeated except that glass fibers were used as the filler. The results are given in Table 3.
Note re Table 3:
*1:
   A: acrylonitrile,
   S: styrene,
   G: glycidyl methacrylate

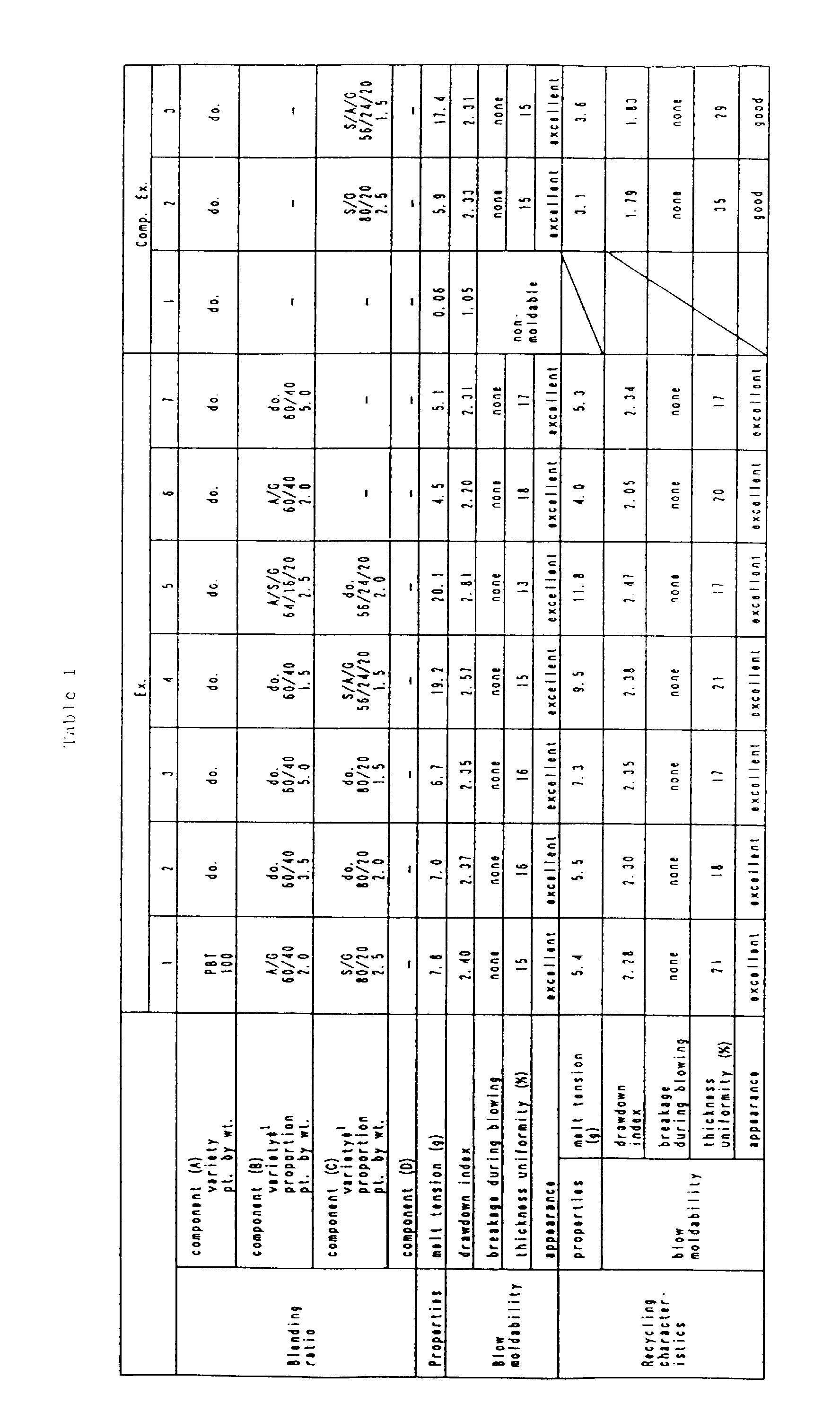

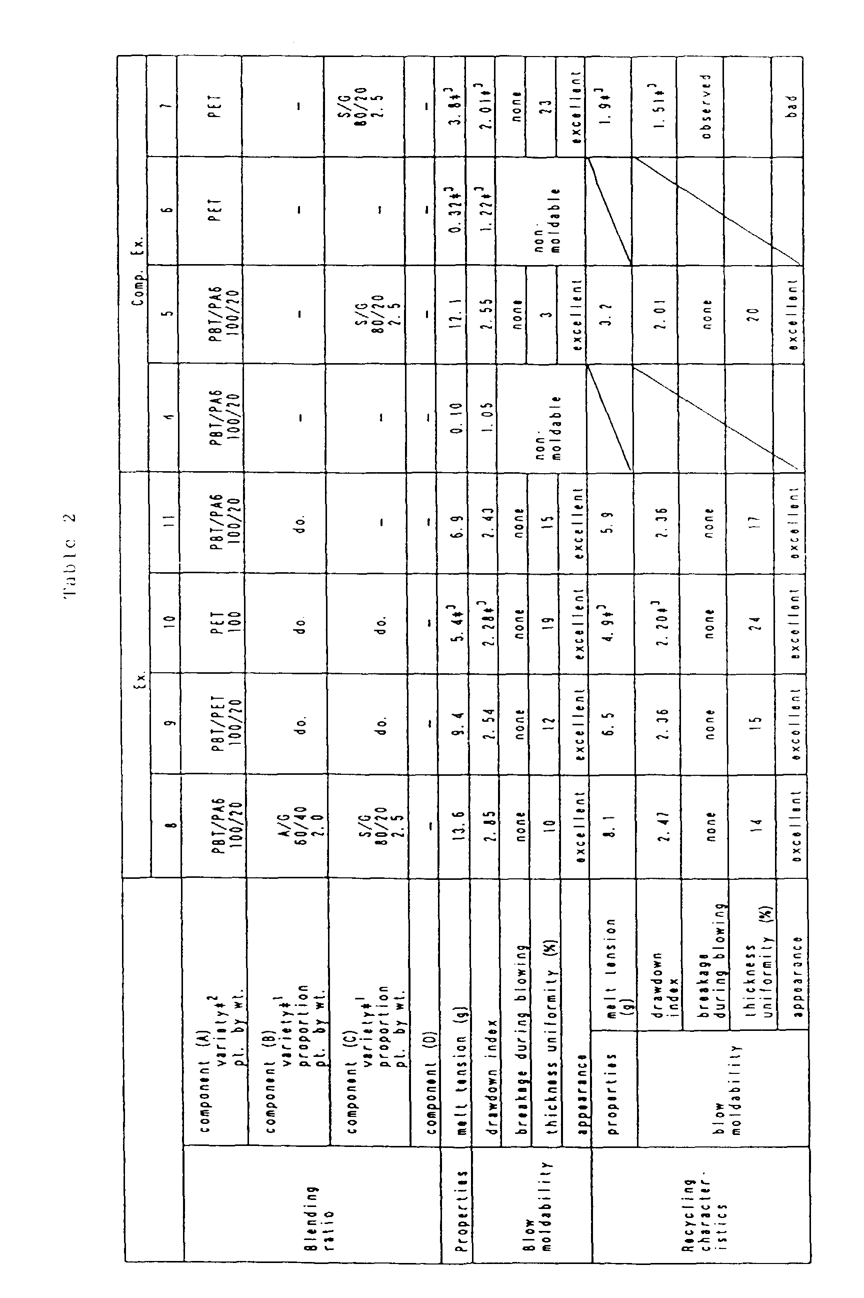

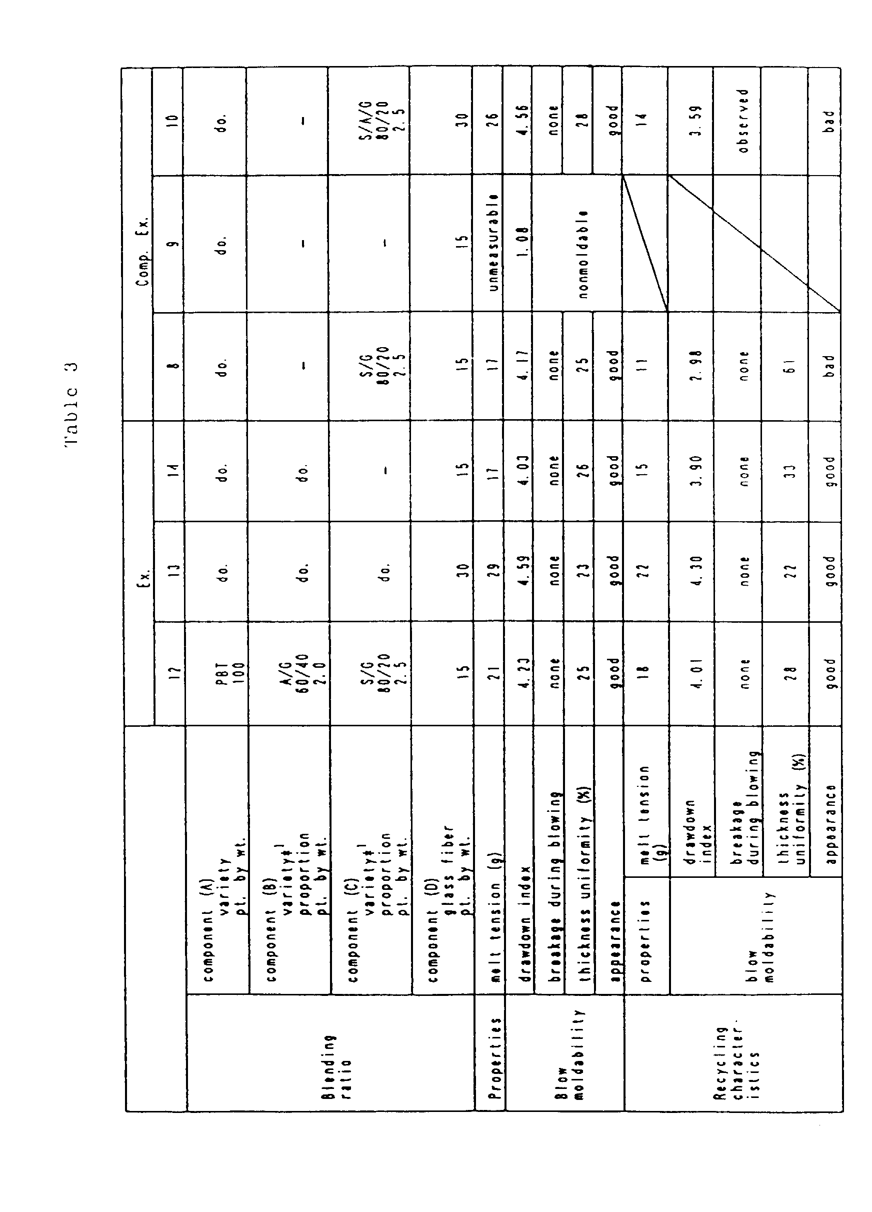

## Claims

1. A polyester resin composition for blow or extrusion molding prepared by blending:
(A) 100 parts by weight of a thermoplastic polyester resin prepared from mainly an aromatic dicarboxylic acid or an ester-forming derivative thereof and mainly an aliphatic dihydroxy compound having 2 to 8 carbon atoms,
(B) 0.5 to 10 parts by weight of an acrylonitrile copolymer comprising (B-1) 51 to 97% by weight of acrylonitrile units, (B-2) 49 to 3% by weight of epoxidized α,β-unsaturated monomer units,
(C) 0 to 10 parts by weight of a styrene copolymer comprising (C-1) 40 to 97% by weight of styrene unit, (C-2) 60 to 3% by weight of an epoxidized α,β-unsaturated monomer unit and 0 to 50% by weight of a vinylic monomer unit other than the components (C-1) and (C-2),
and
(D) 0 to 100 parts by weight of at least one of fibrous, powdery or flaky fillers.

2. A polyester resin composition as claimed in claim 1, wherein the epoxidized α,β-unsaturated monomer units (B-2) and (C-2) respectively constituting the copolymers (B) and (C) are each an α,β-unsaturated glycidyl ester unit.

3. A polyester resin composition as claimed in claim 2, wherein the said styrene copolymer (C) is a terpolymer produced from at least one of acrylonitrile, vinyl chloride, α-methylstyrene and brominated styrene in addition to (C-1) styrene and (C-2) a glycidyl ester of an α,β-unsaturated acid.

4. A polyester resin composition as claimed in any preceding claim, wherein the copolymer (B) further includes up to 46% by weight (based on the weight of the copolymer) of vinylic monomer units other than the components (B-1) and (B-2).

5. A polyester resin composition as claimed in any preceding claim, wherein the said thermoplastic polyester resin (A) is a polymer or copolymer comprising butylene terephthalates as the main repeating unit.

6. A polyester resin composition as claimed in any of claims 1 to 4, wherein the said thermoplastic polyester resin (A) is a polymer or copolymer comprising ethylene terephthalates as the main repeating unit.

7. A polyester resin composition as claimed in any preceding claim, prepared by further adding: (E) 0 to 100 parts by weight of a thermoplastic polyamide resin.

8. A hollow molded article made by blow or extrusion molding from a polyester resin composition as claimed in any preceding claim.

## Patentansprüche

1. Polyesterharzzusammensetzung zum Blasformen oder Strangpressen, hergestellt durch Mischen von:
(A) 100 Gewichtsteilen eines thermoplastischen Polyesterharzes, vornehmlich hergestellt aus einer aromatischen Dicarbonsäure oder einem esterbildenden Derivativ derselben und hauptsächlich einer aliphatischen Dihydroxyverbindung mit 2 bis 8 Kohlenstoffatomen,
(B) 0,5 bis 10 Gewichtsteilen eines Acrylnitril-Copolymers, umfassend (B-1) 51 bis 97 Gew.-% Acrylnitril-Einheiten, (B-2) 49 bis 3 Gew.-% epoxidierte α,ß-ungesättigte Monomereinheiten,
(C) 0 bis 10 Gewichtsteilen eines Styrol-Copolymers, umfassend (C-1) 40 bis 97 Gew.-% Styroleinheit, (C-2) 60 bis 3 Gew.-% einer epoxidierten α,β-ungesättigten Monomereinheit und 0 bis 50 Gew.-% einer anderen Vinyl-Monomereinheit als die Komponenten (C-1) und (C-2), und
(D) 0 bis 100 Gewichtsteile von wenigstens einem faserigen, pulvrigen oder flockigen Füllstoff.

2. Polyesterharzzusammensetzung nach Anspruch 1, bei der die epoxidierten α,β-ungesättigten Monomereinheiten (B-2) und (C-2), die jeweils die Copolymere (B) und (C) bilden, jeweils eine α,β-ungesättigte Glycidylestereinheit sind.

3. Polyesterharzzusammensetzung nach Anspruch 2, bei der das genannte Styrol-Copolymer (C) ein Terpolymer ist, das hergestellt wurde aus wenigstens einer Komponente aus Acrylnitril, Vinylchlorid, α-Methylstyrol und bromiertem Styrol zusätzlich zu (C-1) Styrol und (C-2) einem Glycidylester einer α,β-ungesättigten Säure.

4. Polyesterharzzusammensetzung nach einem der vorherigen Ansprüche, bei der das Copolymer (B) ferner bis zu 46 Gew.-% (auf der Basis des Gewichtes des Copolymers) anderer Vinyl-Monomereinheiten als die Komponenten (B-1) und (B-2) aufweist.

5. Polyesterharzzusammensetzung nach einem der vorherigen Ansprüche, bei der das genannte thermoplastische Polyesterharz (A) ein Polymer oder Copolymer ist, das Butylen-Terephthalate als Hauptwiederholungseinheit enthält.

6. Polyesterharzzusammensetzung nach einem der Ansprüche 1 bis 4, bei der das genannte thermoplastische Polyesterharz (A) ein Polymer oder Copolymer ist, das Ethylen-Terephthalate als Hauptwiederholungseinheit enthält.

7. Polyesterharzzusammensetzung nach einem der vorherigen Ansprüche, dadurch hergestellt, daß ferner folgendes zugegeben wird:
(E) 0 bis 100 Gewichtsteile eines thermoplastischen Polyamidharzes.

8. Hohlformkörper, hergestellt durch Blasformen oder Strangpressen aus einer Polyesterharzzusammensetzung nach einem der vorherigen Ansprüche.

## Revendications

1. Composition de résine polyester pour moulage par soufflage ou par extrusion, préparée par mélange :
(A) de 100 parties en poids d'une résine polyester thermoplastique préparée principalement à partir d'un acide dicarboxylique aromatique ou d'un dérivé estérifiant de cet acide et principalement d'un composé dihydroxylique aliphatique comportant de 2 à 8 atomes de carbone,
(B) de 0,5 à 10 parties en poids d'un copolymère d'acrylonitrile comprenant (B-1) de 51 à 97 % en poids de motifs acrylonitrile, (B-2) de 49 à 3 % en poids de motifs monomères époxydés à insaturation en α,β,
(C) de 0 à 10 parties en poids d'un copolymère de styrène comprenant (C-1) de 40 à 97 % en poids d'un motif styrène, (C-2) de 60 à 3 % en poids d'un motif monomère époxydé insaturé en α,β et de 0 à 50 % en poids d'un motif monomère vinylique autre que les composants (C-1) et (C-2), et
(D) de 0 à 100 parties en poids d'au moins une charge fibreuse, pulvérulente ou en flocons.

2. Composition de résine polyester selon la revendication 1, où les motifs des monomères époxydés à insaturation en α,β (B-2) et (C-2), respectivement constituant les copolymères (B) et (C), sont chacun des motifs d'esters glycidyliques insaturés en α,β.

3. Composition de résine polyester selon la revendication 2, où ledit copolymère de styrène (C) est un terpolymère préparé à partir d'au moins un acrylonitrile, de chlorure de vinyle, d'α-méthylstyréne et du styrène bromé en plus de (C-1) styrène et de (C-2) un ester glycidylique d'un acide insaturé en α,β.

4. Composition de résine polyester selon l'une quelconque des revendications précédentes, où le copolymère (B) comprend de plus jusqu'à 46 % en poids (par rapport au poids du copolymére). de motifs monomères vinyliques autres que les composants (B-1) et (B-2).

5. Composition de résine polyester selon l'une quelconque des revendications précédentes, où ladite résine polyester thermoplastique (A) est un polymère ou copolymère comprenant des poly(téréphtalates de butylène) en tant que motif répétitif principal.

6. Composition de résine polyester selon l'une quelconque des revendications 1 à 4, où ladite résine polyester thermoplastique (A) est un polymère ou un copolymère comprenant des téréphtalates d'éthylène comme motif répétitif principal.

7. Composition de résine polyester selon l'une quelconque des revendications précédentes, préparée par addition en plus :
(E) de 0 à 100 parties en poids d'une résine polyamide thermoplastique.

8. Article moulé creux préparé par émoulage par soufflage ou par extrusion à partir d'une composition de résine polyester selon l'une quelconque des revendications précédentes.
